# EUROPÄISCHE PATENTANMELDUNG

(11) **EP 0 579 344 A1**
(43) Veröffentlichungstag der Anmeldung: **19.01.1994**
(21) Anmeldenummer: 93250177.8
(22) Anmeldetag: 18.06.1993
(51) Int. Cl.: B23P 15/14, F16H 55/06, C21D 9/32

(54) **Verfahren zum Herstellen eines Zahnradelementes einer Ritzelwelle**

(30) Priorität: 02.07.1992 DE 4221958
(71) Anmelder: MANNESMANN Aktiengesellschaft, D-40027 Düsseldorf (DE)
(72) Erfinder: Boddenberg, Klaus, D-4150 Krefeld-Uerdingen (DE)
(74) Vertreter: Presting, Hans-Joachim, Dipl.-Ing.

(57) **Zusammenfassung**

Die Erfindung betrifft ein Verfahren zum Herstellen eines Zahnradelementes einer aus einem tieftemperaturbeständigen Stahl hergestellten Ritzelwelle, an dessen Ende die Laufräder der Verdichterstufen eines Getriebe-Turboverdichters zum Verdichten tiefgekühlter Gase angeordnet sind, bei dem ausgehend von einem geschmiedeten oder gegossenen Rundblock durch mechanische Bearbeitung das Zahnradelement und der daran anschließende Wellenteil herausgearbeitet und die Verzahnung des Zahnradelementes mindestens im Flankenbereich geschliffen und/oder poliert ist.

Zum Ausgleich der schlechten Oberflächenqualität nach der mechanischen Endbearbeitung des aus einem tieftemperaturbeständigen Stahl hergestellten Zahnradelements wird daher vorgeschlagen, daß nach der mechanischen Endbearbeitung das Zahnradelement gereinigt und anschließend galvanisch mit einer Schicht eines Metalles aus der Gruppe der duktilen Nichteisenmetalle überzogen wird. Um für höhrere Beanspruchungen eine ausreichende Flankenfestigkeit zu erreichen, wird alternativ vorgeschlagen, daß vor der Endbearbeitung durch Schleifen und/oder Polieren das Zahnradelement einer Aufkohlungsbehandlung unterworfen wird.

## Beschreibung

Die Erfindung betrifft ein Verfahren zum Herstellen eines Zahnradelementes einer aus einem tieftemperaturbeständigen Stahl hergestellten Ritzelwelle gemäß dem Gattungsbegriff der Ansprüche 1 und 2.

Das Vordringen von Radialverdichtern in immer neue Anwendungsgebiete und auch die Integration verschiedener Verdichtungsprozesse in ein gemeinsames Verdichtergehäuse führen dazu, daß die Beanspruchung der Wellenteile, auf denen die Laufräder lösbar angeordnet sind, hinsichtlich Temperatur des zu verdichtenden Mediums sehr unterschiedlich ist zu den Bereichen, die nicht damit beaufschlagt werden. Beispielsweise müssen bei einem LNG-Kompressor die Verdichterschaufeln aus einem zähen, tieftemperaturbeständigen Stahl (z. B. 9 % Nickelstahl) gefertigt werden, damit diese auch bei diesen Temperaturen noch eine ausreichende Zähigkeit aufweisen. Andererseits muß die das Laufrad antreibende Ritzelwelle den getriebetechnischen Bedingungen genügen. Insbesondere das Zahnradelement wird im Hinblick auf ausreichende Dauer- und Flankenfestigkeit üblicherweise aus einem In der US-PS 3,420,755 wird ein Verfahren zur Oberflächenbehandlung von reibmäßig miteinander kontaktierenden metallischen Teilen offenbart, bei dem nach dem Polieren die veränderte Oberflächenschicht durch Sandstrahlen beseitigt wird und anschließend elektrolytisch ein metallischer Überzug aufgebracht wird, der mindestesns aus zwei Schichten unterschiedlicher Metalle besteht. Mit Hilfe dieses Verfahrens sollen die insbesondere im Kernkraftwerksbereich bisher aufgetretenen Schwierigkeiten bei der schmiermittelfreien Linearbewegung von Teilen im höheren Temperaturbereich vermindert werden. Hinweise auf Oberflächenbehandlungen von Zahnrädern sind dieser Schrift nicht zu entnehmen.

In de DE-PS 32 36 376 wird ein Verfahren zum Schützen von metallischen, kraftschlüssig gepaarten, schwingend belasteten Mschinenteilen vor Reibkorrosion angegeben, bei dem zur Vermeidungeines direkten Kontaktes zwischen den Fügeflächen für aus Titan oder einer Titanlegierung bestehenden Maschinenteile auf einem der Maschinenteile elektrolytisch eine Kupferschicht aufgebracht wird. Das Problem des Fressens von miteinander kämmenden Zahnrädern, wovon ein Zahnrad aus einem tieftemperaturbeständigen Stahl besteht, wird nicht angesprochen.

Ein Verfahren zur Vermeidung des Verziehens der einem Aufkohlungsprozeß unterworfenen Teile ist Gegenstand der US-PS 1,282,467. Erfindungswesentlich dabei ist die Abfolge der Verfahrensschritte, wobei die abschließende Vergütung bestehend aus einem Erwärmen mit nachfolgenden Abschrecken in Öl oder Wasser nach der Endbearbeitung durchgeführt wird. Ein Hinweis auf eine Aufkohlung tieftemperaturbeständiger Stähle mit hohem Nickelgehalt und niedrigem Kohlenstoffgehalt ist dieser Schrift nicht entnehmbar.

In der GB-PS 906 518 ist eine Behandlung von Zahnrädern aus Baustählen offenbart, bei dem ein Aufkohlungsprozeß vorgeschaltet istund anschließend ein Weichnitrieren in Verbindung mit einem Induktionshärten erfolgt. Das Verfahren wird mit einem Spannungsarmglühen abgeschlossen. Durch das Weichnitrieren soll die Dauerfestigkeit und durch das Induktivhärten die Flankenfestigkeit erhöht werden. Die besondere Problematik der Behandlung von Zahnrädern aus tieftemperaturbeständigen Stählen wird nicht angesprochen.

Aufgabe der Erfindung ist es, ein Verfahren zum Herstellen eines Zahnradelementes einer aus einem tieftemperaturbeständigen Stahl hergestellten Ritzelwelle anzugeben, das zum Antrieb der Laufräder eines Getriebe-Turboverdichters zum Verdichten tiefgekühlter Gase besonders geeignet ist.

Diese Aufgabe wird mit den Merkmalen des Anspruches 1 gelöst. Eine andere Lösungsvariante ist im Anspruch 2 niedergelegt. Vorteilhafte Weiterbildungen sind Bestandteil von Unteransprüchen.

Zum Ausgleich der schlechten Oberflächenqualität nach der mechanischen Endbearbeitung des aus einem tieftemperaturbeständigen Stahl hergestellten Zahnradelementes wird erfindungsgemäß vorgeschlagen, dieses zuvor chemisch zu reinigen und anschließend galvanisch mit einer Schicht eines Metalls aus der Gruppe der duktilen Nichteisenmetalle zu überziehen. Dabei hat sich Kupfer als besonders geeignetes Material herausgestellt. Der galvanische Überzug erfolgt in der üblichen Weise durch Eintauchen des zuvor gereinigten Zahnradelementes in ein elektrolytisches Bad, das eine entsprechende Kupferlösung aufweist. Als Schichtdicke wird ein Wert im Bereich von 4 bis 10 µm angestrebt. Die Versuche haben gezeigt, daß ein so behandeltes Zahnradelement beim Einlaufen weniger beansprucht wird, da durch die Kupferschicht die verbliebenen Rauheitsspitzen infolge der zu einem Schmiereffekt neigenden mechanischen Endbearbeitung überdeckt werden. Nach der Einlaufphase ist zwar ein großer Teil der aufgebrachten Kupferschicht weggedrückt, aber in den mikroskopisch kleinen Vertiefungen der Oberfläche bleibt die Kupferschicht haften. Die weitere Verwendung eines so behandelten Zahnradelementes nach der Einlaufphase bereitet keine Schwierigkeiten, da die Oberflächenqualität im Hinblick auf die Belastung zufriedenstellend ist. Die niedrigere Flankenfestigkeit des Stahles kann durch diese Maßnahme aber nicht kompensiert werden.

Um für höhere Beanspruchungen eine ausreichende Flankenfestigkeit zu erreichen, wird deshalb alternativ vorgeschlagen, das Zahnradelement vor der mechanischen Endbearbeitung einem Aufkohlungsprozeß zu unterwerfen. Ausgehend von einem üblichen Kohlenstoffgehalt im Bereich von 0,03 bis 0,06 Gew% wird der oberflächennahe Bereich auf einen Kohlenstoffgehalt im Bereich von 0,4 bis 0,6 Gew% aufgekohlt. Die Behandlungsdauer der Aufkohlung wird dabei so eingestellt, daß sich eine Aufkohlungstiefe von etwa 0,1 x Zahnradmodul ergibt. Durch diese Aufkohlung wird die Härte im oberflächennahen Bereich entsprechend angehoben, so daß nunmehr eine ausreichende Flankenfestigkeit vorliegt und außerdem durch die höhere Härte die abschließende mechanische Endbearbeitung sei es Schleifen und/oder Polieren zu einer wesentlich besseren Oberflächenqualität führt. Diese Art der Behandlung geht aber zu Lasten der Zähigkeit, so daß die Gefahr des Gewaltbruches des Zahnradelementes bei Überbelastung zunimmt.

Eine weitere Verbesserung wird dadurch erreicht, daß man nach der Aufkohlung eine entsprechende Wärmebehandlung durchführt. Dabei muß sich diese Anlaßbehandlung temperaturmässig nach dem Kern richten, damit dieser eine entsprechende Zähigkeit erreicht. Die Temperaturen liegen je nach Stahlsorte bei etwa 550 Grad Celsius. Nach dem Erwärmen wird das Zahnradelement an Luft abgekühlt und mechanisch endbearbeitet.

Für besonders extreme Beanspruchungen wird vorgeschlagen, alle drei genannten Maßnahmen miteinander zu kombinieren. Das bedeutet, daß nach der mechanischen Vorbearbeitung durch Fräsen, Hobeln oder Drehen des Zahnradelementes zuerst einer Aufkohlungsbehandlung und anschließend einer Wärmebehandlung unterzogen wird.

Danach erfolgt die mechanische Endbearbeitung beispielsweise Schleifen und/oder Polieren. Auf das so hergestellte Zahnradelement wird abschließend galvanisch eine Kupferschicht aufgebracht, um die Beanspruchung in der Einlaufphase besser zu verteilen.

In der Zeichnung wird das erfindungsgemäße Verfahren näher erläutert.
Es zeigen:
- Figur 1: in einer Längsansicht einen Teilbereich einer Ritzelwelle
- Figur 2: im vergrößerten Maßstab einen Teilquerschnitt des Zahnradelementes entlang der Linie A-A in Fig. 1

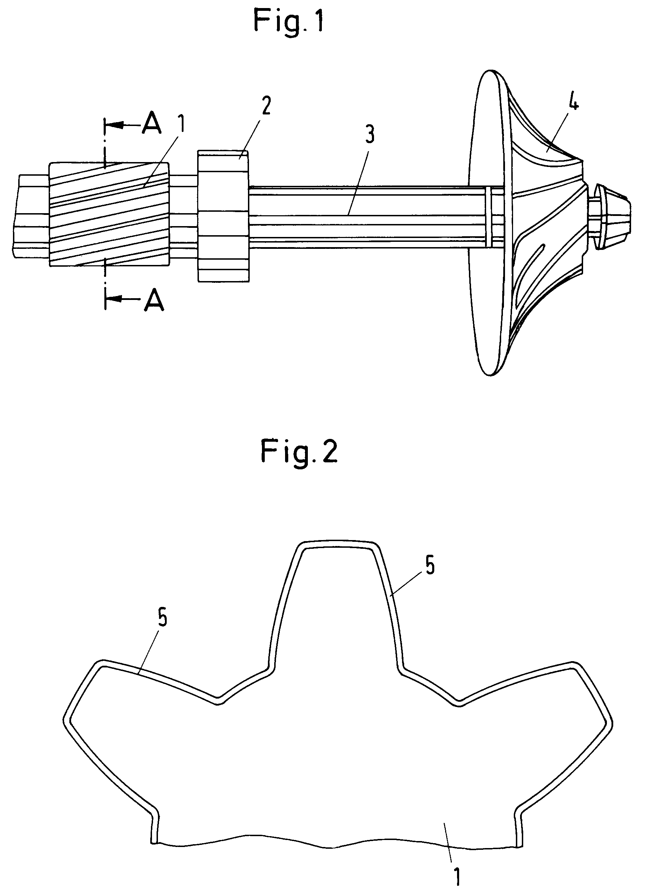

In Figur 1 ist in einer Längsansicht ein Teilbereich einer Ritzelwelle dargestellt. Sie besteht aus einem Zahnradelement 1, einer Lagerstelle 2 und einem Wellenteil 3 und einem darauf befestigten Laufrad 4. Für den Anwendungsfall eines LNG-Kompressors sind alle genannten Teile wegen der Temperaturbeanspruchung aus einem tieftemperaturbeständigen Stahl, beispielsweise 9 % Nickelstahl gefertigt. Für die nachfolgend erörterte Behandlung des Zahnradelementes 1 ist es dabei unerheblich, ob das Laufrad 4 einstückig zusammen mit dem Zahnradelement und dem Wellenteil 3 gefertigt wurde oder wie in diesem Beispiel gezeigt, separat hergestellt und mit dem Wellenteil 3 verbunden wird.

In Figur 2 ist in einem vergrößerten Maßstab ein Teilquerschnitt des Zahnradelementes 1 entlang der Linie A-A in Figur 1 dargestellt. Erfindungsgemäß ist die Oberfläche der Verzahnung dieses Zahnradelementes 1 mit einer dünnen Kupferschicht 5 überzogen. Die Schichtdicke beträgt etwa 6 µm. Diese Kupferschicht 4 ebnet die im µm Bereich liegenden Rauheitsspitzen der Oberfläche ein und verteilt damit gleichmässiger die beim Einlauf des Zahnradelementes 1 auftretenden Belastungen.

## Patentansprüche

1. Verfahren zum Herstellen eines Zahnradelementes einer aus einem tieftemperaturbeständigen Stahl hergestellten Ritzelwelle, an dessen Enden die Laufräder der Verdichterstufen eines Getriebe-Turboverdichters zum Verdichten tiefgekühlter Gase angeordnet sind, bei dem ausgehend von einem geschmiedeten oder gegossenen Rundblock durch mechanische Bearbeitung das Zahnradelement und der daran anschließende Wellenteil herausgearbeitet und die Verzahnung des Zahnradelementes mindestens im Flankenbereich geschliffen und oder poliert und anschließend das Zahnradelement gereinigt und abschließend galvanisch mit Kupfer in einer Schichtdicke von 4 bis 10 u überzogen wird.

2. Verfahren zum Herstellen eines Zahnradelementes einer aus einem tieftemperaturbeständigen Stahl hergestellten Ritzelwelle, an dessen Enden die Laufräder der Verdichterstufen eines Getriebe-Turboverdichters zum Verdichten tiefgekühlter Gase angeordnet sind, bei dem ausgehend von einem geschmiedeten oder gegossenen Rundblock durch mechanische Bearbeitung das Zahnradelement und der daran anschließende Wellenteil herausgearbeitet und die Verzahnung des Zahnradelementes mindestens im Flankenbereich geschliffen und oder poliert ist,
**dadurch gekennzeichnet,**
daß vor der Endbearbeitung durch Schleifen und/oder Polieren der oberflächennahe Bereiche des Zahnradelementes auf einen Kohlenstoffgehalt in der Spanne zwischen 0,4 bis 0,6 Gew.-% aufgekohlt und die Behandlungsdauer so eingestellt wird, daß sich eine Aufkohlungstiefe von 0,1 x Zahnradmodul ergibt.

3. Verfahren nach Anspruch 2,
**dadurch gekennzeichnet,**
daß nach der Aufkohlungsbehandlung und vor der mechanischen Endbearbeitung durch Schleifen und/oder Polieren das Zahnradelement einer Wärmebehandlung unterzogen wird.

4. Verfahren nach Anspruch 3,
**dadurch gekennzeichnet,**
daß die Wärmebehandlung aus einen, Anlassen bei einer Temperatur im Bereich von 520 bis 580 Grad Celsius mit einer nachfolgenden Luftabkühlung bestellt.

5. Verfahren nach den Ansprüchen 1 bis 4,
**dadurch gekennzeichnet,**
daß das Zahnradelement nach der mechanischen Bearbeitung zuerst einer Aufkohlungsbehandlung und danach einer Wärmebehandlung unterzogen wird und anschließend die mechanische Endbearbeitung durch Schleifen und/oder Polieren erfolgt und abschließend das Zahnradelement galvanisch mit einer Kupferschicht überzogen wird.
